# EUROPÄISCHE PATENTSCHRIFT

(11) **EP 2 920 537 B1**
(45) Veröffentlichungstag und Bekanntmachung des Hinweises auf die Patenterteilung: **14.02.2018**
(21) Anmeldenummer: 13799497.6
(22) Anmeldetag: 19.11.2013
(51) Int. Cl.: F28D 15/02, F01B 1/08, F01B 9/02, F01P 3/12

(54) **VERFAHREN ZUM HERSTELLEN EINES FÜR EIN VORBESTIMMTES MEDIUM DRUCKDICHTEN HOHLKÖRPERS**
MANUFACTURING METHOD OF A PRESSURE TIGHT HOLLOW BODY FOR A PARTICULAR MEDIUM
PROCÉDÉ DE FABRICATION D'UN CORPS CREUX DE MANIÈRE ÉTANCHE À LA PRESSION POUR UN MEDIUM PRÉDÉTERMINÉ

(30) Priorität: 19.11.2012 DE 102012111136; 28.01.2013 DE 102013100830
(43) Veröffentlichungstag der Anmeldung: 23.09.2015
(73) Patentinhaber: Bertwin R. Geist Immobilien + Erneuerbare Energien e.K., 82547 Eurasburg (DE)
(72) Erfinder: FICHT, Reinhold, 85614 Kirchseeon (DE); ADAMIDIS, Evangelos, 85567 Grafing (DE); STEINBEISSER, Tobias, 81541 München (DE)
(74) Vertreter: Oberdorfer, Jürgen
(86) Internationale Anmeldenummer: PCT/EP2013/074180
(87) Internationale Veröffentlichungsnummer: WO 2014/076305

(56) Entgegenhaltungen:
- CH-A- 202 301
- DE-A1- 1 922 748
- DE-A1- 2 324 850
- DE-A1- 4 405 091
- DE-A1-102005 005 041
- GB-A- 1 270 206
- JP-A- 2005 048 635
- US-A1- 2011 083 829
- US-A1- 2012 011 720

## Beschreibung

Die vorliegende Erfindung betrifft ein Verfahren zur Herstellung eines für ein vorbestimmtes Medium druckdichten Hohlkörpers sowie eine Kolbenstange.

Hohlkörper, die für ein vorbestimmtes, bei bestimmungsgemäßem Gebrauch des Hohlkörpers sich in dessen hohlen Innenbereich angeordnetes Medium druckdicht sind, können für verschiedene Einsatzzwecke vorgesehen werden. Ein möglicher Einsatzzweck ist die Verwendung des Hohlkörpers als Wärmerohr. Bei dieser Anwendung wird das Medium aufgrund einer Bewegung des Wärmerohres zwischen einem heißen Ende und einem kalten Ende des Wärmerohrs hin und her bewegt, wobei es jeweils an der heißen Seite Wärme aufnimmt und diese an dem kälteren Ende abgibt. Auf diese Weise ist eine Wärmeabfuhr von dem heißen Ende möglich.

Diese Anwendung ist beispielsweise aus der DE 44 05 091 A1 bekannt. Dort wird ein als Wärmerohr ausgebildeter Hohlkörper als Kolbenstange eines Kurbelschlaufmotors eingesetzt. Dabei verbindet die Kolbenstange den Kolben mit der Kurbelschlaufe. Die sich in der Kolbenstange befindliche Flüssigkeit, die z.B. Wasser sein kann, nimmt am kolbenseitigen Ende der Kolbenstange Wärme auf, verdampft dabei und wird dann durch die Bewegung der Kurbelschlaufe und damit der Kolbenstange in Richtung der Kurbelschlaufe bewegt. Dieses Ende der Kolbenstange ist kühler oder kann sogar gekühlt werden, damit die Flüssigkeit dort kondensiert und somit Wärme abgibt. Die Kolbenstange ist einteilig mit der Kurbelschlaufe verbunden. Der Kolben wird auf einen in das offene Ende der Kolbenstange eingesetzten Stopfen aufgeschraubt, nachdem die Flüssigkeit in die Kolbenstange eingebracht wurde. Eine derartige Schraubverbindung kann jedoch bei der hohen Belastung, die in einem Kurbelschlaufmotor auftritt, undicht werden. Dies wird noch dadurch begünstigt, dass durch die schnellen Hin- und Herbewegungen entsprechende Schwingungen auftreten, wodurch die Schraubverbindung nach und nach gelöst werden kann und gegebenenfalls in bestimmten Zeitabständen nachgezogen werden muss. Auch der Stopfenverschluss an sich kann durch die Schwingungen und die damit verbundene Abnutzung undicht werden.

Ein weiterer Anwendungsfall für einen für ein vorbestimmtes Medium druckdichten Hohlkörpers ist die Verwendung als Ventil für eine Hubkolbenbrennkraftmaschine. Ein solches Ventil ist aus der DE 2 324 850 bekannt. Bei dem dort beschriebenen Verfahren wird der Ventilschaft mit dem Ventiltellerteil gasdicht verschweißt. Anschließend wird eine Wärmeleitflüssigkeit, insbesondere Natrium, in flüssigem Zustand in einen Innenhohlraum des Ventilschafts eingefüllt. Hiernach muss die Wärmeleitflüssigkeit abgekühlt werden, damit diese den festen Aggregatzustand einnimmt. Nach einer aufwendigen Reinigung wird das Ventilabschlussstück endseitig in den Innenhohlraum des Ventilschafts eingesteckt und anschließend mittels Elektronenstrahlschweißen an den Ventilschaft befestigt. Das beschriebene Verfahren ist sehr aufwendig, da viele Verfahrensschritte notwendig sind und während der Herstellung eine mehrfache Erhitzung mit anschließender gezielter Abkühlung notwendig ist.

Aus der DE 19 22 748 ist ein Verfahren und eine Vorrichtung zum Füllen eines Wärmerohres bekannt. Als eine nachteilige Möglichkeit wird angegeben, bei der Herstellung eines Wärmerohres die Arbeitsflüssigkeit einzufrieren, das Wärmerohr auszupumpen, d. h. mit einem Vakuum zu versehen und anschließend mittels einer Elektronenstrahlschweißung zu verschweißen. Für das Einfrieren wird als nachteilig erachtet, dass sich Raureif auf der Mantelfläche des Wärmerohres bilden kann, welcher in der Elektronenstrahlschweißmaschine stört. Diese Druckschrift geht also betreffend das Schweißverfahren von dem Elektronenstrahlschweißen aus, was es erforderlich macht, das Innere des Wärmerohres mit Vakuum zu beaufschlagen, da das Elektronenstrahlschweißen im Vakuum stattfindet. Das Einfrieren der Arbeitsflüssigkeit dient demnach dazu, ein Verflüchtigen, d. h. ein Verdampfen der Arbeitsflüssigkeit unter Vakuum zu verhindern.

Des Weiteren wird in der oben genannten Druckschrift vorgeschlagen, die Arbeitsflüssigkeit zunächst in eine Ampulle zu geben und die Ampulle vor dem Zuschweißen des Wärmerohres in den Hohlraum einzusetzen. Nachdem das Wärmerohr geschlossen ist, soll die Ampulle zerstört werden, um die Arbeitsflüssigkeit freizusetzen. Es wird weiterhin vorgeschlagen, die Ampulle aus Glas oder aus Kunststoff auszubilden.

Bei diesem Verfahren ist nachteilig, dass die Ampulle relativ stabil ausgebildet werden muss, damit sie während der Vakuumierung zum Zwecke des Elektronenstrahlschweißens nicht zerbirst. Bei einer relativ stabil und massiv ausgebildeten Ampulle ist nicht immer gewährleistet, dass diese nach dem Schließen des Wärmerohres auch zuverlässig zerstört werden kann. Insbesondere bei einer Ampulle aus Glas ist nachteilig, dass nach dem Zerstören der Ampulle Glassplitter im Hohlraum verbleiben und gegebenenfalls eine Innenoberfläche des Hohlraumes beschädigen können. Für ein Wärmerohr als Kolbenstange einer Hubkolbenmaschine ist es nicht akzeptabel, Glassplitter innerhalb der Kolbenstange zu belassen. Die DE 19 22 748, DE 29 43 731 und GB 12 70 206 zeigen ein Verfahren nach dem Oberbegriff der Ansprüche 1 und 2.

Es ist daher Aufgabe der Erfindung, ein auf einfache Weise durchführbares Verfahren zur Herstellung eines für ein vorbestimmtes Medium druckdichten Hohlkörpers bereit zu stellen, bei dem ein Entweichen des Mediums aus dem Hohlraum des Hohlkörpers während der Herstellung verhindert wird.

Eine weitere Aufgabe der Erfindung ist es, bekannte Verfahren zur Herstellung eines für ein vorbestimmtes Medium druckdichten Hohlkörpers wirtschaftlicher und in der Durchführung einfacher zu gestalten.

Eine weitere Aufgabe der Erfindung ist es, ein Verfahren zur Herstellung eines für ein vorbestimmtes Medium druckdichten Hohlkörpers bereit zu stellen, bei dem auch leicht flüchtige und insbesondere nichtmetallische Medien als vorbestimmtes Medium zum Einsatz kommen können.

Diese Aufgaben werden durch ein Verfahren zur Herstellung eines für ein vorbestimmtes Medium druckdichten Hohlkörpers gemäß Anspruch 1 sowie durch ein Verfahren zur Herstellung eines für ein vorbestimmtes Medium druckdichten Hohlkörpers gemäß Anspruch 2 gelöst.

Es ist eine weitere Aufgabe der Erfindung eine Kolbenstange mit einem für ein vorbestimmtes Medium druckdichten Hohlkörper bereitzustellen, der auf einfache Weise herzustellen ist.

Es ist eine weitere Aufgabe der Erfindung eine Kolbenstange mit einem für ein vorbestimmtes Medium druckdichten Hohlkörper bereitzustellen, bei dem eine ausreichende Menge an Medium in dem Hohlkörper vorhanden ist.

Diese Aufgaben werden durch eine Kolbenstange gemäß Anspruch 9 gelöst.

Vorteilhafte Weiterbildungen sind Gegenstand der jeweiligen Unteransprüche.

Bei einer ersten Alternative des erfindungsgemäßen Verfahrens zur Herstellung eines für ein vorbestimmtes Medium druckdichten Hohlkörpers werden zumindest zwei Teilkörper gefügt. Die zumindest zwei Teilkörper bilden in gefügtem Zustand den Hohlkörper, der das Medium bei bestimmungsgemäßem Gebrauch des Hohlkörpers in gasförmigem und/oder flüssigem Zustand enthält. Dadurch wird beispielsweise die Verwendung als Wärmerohr ermöglicht, bei der das Medium an einem heißen Ende verdampft wird und an einem kühleren Ende kondensiert. Die zumindest zwei Teilkörper werden dabei mittels eines unter Umgebungsdruck erfolgreich durchführbaren, stoffschlüssigen Fügeverfahrens stoffschlüssig gefügt. Vor dem stoffschlüssigen Fügen wird dabei in zumindest einen Teilhohlraum zumindest eines der Teilkörper das Medium in teilfestem oder festem Zustand eingesetzt, das Medium (2) zusammen mit einer das Medium (2) in festem oder teilfestem Zustand aufnehmenden oder haltenden Aufnahmeeinrichtung (12), aus der das Medium (2) im flüssigem oder in gasförmigem Zustand entweichen kann, federnd vorgespannt oder vorspannbar eingesetzt wird. Anschließend wird das stoffschlüssige Fügen durchgeführt. Auf diese Weise wird sichergestellt, dass beim Durchführen des stoffschlüssigen Fügens das Medium nicht aus dem Teilhohlraum entweichen kann und insbesondere auch nicht in die stoffschlüssige Fügeverbindung eindringen und diese verunreinigen kann. Durch eine derartige Verunreinigung könnte die Verbindung beispielsweise verspröden oder gar versagen.

Das erfindungsgemäße Verfahren kann mittels eines kostengünstigen und apparativ einfach durchzuführenden stoffschlüssigen Fügeverfahrens, wie z. B. einem Schweißverfahren, insbesondere einem Reibschweißverfahren, durchgeführt werden. Dadurch, dass das Medium zusammen mit einer das Medium in festem oder teilfestem Zustand aufnehmenden oder enthaltenden Aufnahmeeinrichtung eingesetzt wird, kann beispielsweise Wärme, die während des stoffschlüssigen Fügeverfahrens in die Teilkörper oder den einzigen Körper eingeleitet wird, nicht zu schnell zum Medium in teilfesten oder festen Zustand gelangen, dass sich dieses verflüssigt oder dass dieses verdampft, bevor der Hohlraum geschlossen ist. Die Aufnahmeeinrichtung wirkt somit als Isolator zwischen einer Innenwand eines der Teilkörper oder des einzigen Körpers und dem im teilfesten oder festen Zustand eingesetzten Medium. Dies erlaubt es außerdem, das Medium zusammen mit der Aufnahmeeinrichtung in einen der Teilkörper oder in den einzigen Körper vor dem Fügen einzusetzen, ohne dass der betreffende Teilkörper oder der Körper abgekühlt werden muss. Dies verhindert zuverlässig eine Raureifbildung, die gegebenenfalls bei den sich anschließenden stoffschlüssigen Fügeverfahren störend sein kann. Diese Möglichkeit verringert somit den Vorbereitungsaufwand der zu fügenden Teilkörper oder des zu verschließenden Körpers vor dem Herstellen des Hohlkörpers. Des Weiteren dient die Aufnahmeeinrichtung insbesondere dazu, das Medium an einen vorbestimmten Ort in dem Hohlraum bzw. Teilhohlraum transportieren zu können und anschließend vorteilhafter Weise auch zumindest für eine bestimmte Zeit, z. B. klemmend dort zu halten, d. h. örtlich festzulegen. Durch diesen zusätzlichen Halt wird zusätzlich sichergestellt, dass das Medium während der Herstellung nicht in den Bereich vordringt, in dem die Fügeverbindung oder die Verschließung vorgenommen wird.

Dabei ist nicht zwingend erforderlich, dass das Medium vollständig in festem Aggregatzustand vorliegt, wobei dies bevorzugt wird. Das Medium kann beispielsweise auch als Gel vorliegen. Entscheidend ist, dass das Medium in dem eingesetzten Zustand eine ausreichende Steifigkeit oder Trägheit besitzt, die ein Entweichen während des stoffschlüssigen Fügens verhindert. Erfindungsgemäß wird insbesondere auch dann das Entweichen verhindert, wenn beispielsweise im Fall einer Kolbenstange zwei im Wesentlichen hohlzylindrische Teilkörper, die jeweils an einem Ende verschlossen sind, durch das erfindungsgemäße Verfahren gefügt werden, wobei diese Teilkörper sich in einer horizontalen Lage befinden. Würde das Medium in diesem Fall in flüssigem Zustand oder in gasförmigem Zustand in die Teilkörper eingebracht, so wäre ein Entweichen leicht möglich. Dies wird durch das erfindungsgemäße Verfahren verhindert.

Bei einer alternativen Ausführung des erfindungsgemäßen Verfahrens wird ein einziger Körper mittels eines unter Umgebungsdruck erfolgreich durchführbaren, stoffschlüssigen Fügeverfahrens stoffschlüssig verschlossen. Dieser Körper bildet dabei den für das vorbestimmte Medium druckdichten Hohlkörper. Auch dieser Hohlkörper enthält das Medium bei bestimmungsgemäßem Gebrauch in gasförmigem und/oder flüssigem Zustand. Vor dem stoffschlüssigen Verschließen des Körpers wird das Medium auch bei dieser Alternative in teilfestem oder festem Zustand eingesetzt, das Medium (2) zusammen mit einer das Medium (2) in festem oder teilfestem Zustand aufnehmenden oder haltenden Aufnahmeeinrichtung (12), aus der das Medium (2) im flüssigem oder in gasförmigem Zustand entweichen kann, eingesetzt wird. Erst danach wird der Körper stoffschlüssig verschlossen. Die dadurch erreichten Vorteile entsprechen denen der ersten Alternative. Auch bei dieser Alternative wird ein Entweichen des Mediums während der Herstellung wirksam verhindert.

Bei einer vorteilhaften Weiterbildung des erfindungsgemäßen Verfahrens werden die Teilkörper gemäß der ersten Alternative des erfindungsgemäßen Verfahrens unter Wärmeeinwirkung stoffschlüssig gefügt bzw. im Falle der zweiten Alternative des erfindungsgemäßen Verfahrens wird der Körper unter Wärmeeinwirkung stoffschlüssig verschlossen. Unter dem Begriff Wärmeeinwirkung sind dabei sowohl Verfahren zu verstehen, bei denen von einer Wärmequelle Wärme aktiv in die Teilkörper oder den Körper eingebracht wird, als auch Verfahren, bei denen die Wärme während der Durchführung des Verfahrens und insbesondere in den zu fügenden oder dem zu verschließenden Körper entsteht, wie das beispielsweise bei einem Reibschweißverfahren der Fall ist. Das Fügen oder Verschließen unter Wärmeeinwirkung hat sich als besonders vorteilhaft herausgestellt, da auf diese Weise ein einfaches und prozesssicheres druckdichtes Verschließen des Hohlkörpers möglich ist.

Bei einer vorteilhaften Weiterbildung des erfindungsgemäßen Verfahrens werden im Falle der ersten Alternative des erfindungsgemäßen Verfahrens die Teilkörper mittels Verformung und/oder Materialzugabe stoffschlüssig gefügt bzw. im Falle der zweiten Alternative des erfindungsgemäßen Verfahrens der Körper mittels Verformung und/oder Materialzugabe stoffschlüssig verschlossen. Auf diese Weise ist ein sicheres und wirtschaftliches Fügen oder Verschließen des Hohlkörpers möglich. Beispielsweise könnte ein an nur einem Ende offener rohrartiger Körper, nachdem das Medium eingebracht wurde, an dem offenen Ende so verformt werden, dass dieses Ende stoffschlüssig verschlossen wird. Auf diese Weise wäre durch nur einen einfachen Verfahrensschritt ein druckdichter Hohlkörper erzeugt worden. Das Medium wird bei dieser Alternative vor dem Verformungsschritt in festem oder flüssigem Zustand in den Hohlraum des Körpers eingesetzt.

Im Falle einer Reibverschweißung der zwei Teilkörper miteinander würde der Hohlkörper sogar unter Wärmeeinwirkung und durch Verformung hergestellt. Das Reibschweißverfahren wird besonders bevorzugt, wobei grundsätzlich ein Schweißverfahren für das stoffschlüssige Fügen oder Verschließen als vorteilhaft anzusehen ist. Ein ebenfalls bevorzugtes Verfahren ist das Rührreibschweißen, da auch bei diesem Verfahren eine sichere Verbindung im Sinne einer stoffschlüssigen Fügung oder Verschließung möglich ist. Für das erfindungsgemäße Verfahren sind im weitesten Sinne alle stoffschlüssigen Fügeverfahren geeignet, welche unter Umgebungsbedingungen, insbesondere unter Umgebungsdruck erfolgreich durchführbar sind. Ergänzend zu den bereits erwähnten Schweißverfahren sind als mögliche Schweißverfahren auch das Widerstandsschweißen, das Laserschweißen, das Schutzgasschweißen, das Inertgasschweißen, das Autogenschweißen geeignet. Darüber hinaus sind als geeignete stoffschlüssige Fügeverfahren auch Klebverbindungen mittels Klebstoffen, die insbesondere in Abhängigkeit der Temperatur und Druckverhältnisse im Hohlkörper, welche während des Betriebes auftreten, fachmännisch auszuwählen sind. Im Falle von Hohlkörpern, welche aus Kunststoff ausgebildet werden, können auch Schweißverfahren zum Einsatz kommen, die für das Schweißen von Kunststoffen geeignet sind. Hierzu gehören insbesondere das Ultraschallschweißen, das Vibrationsschweißen und das Schmelzschweißen.

Bei einer vorteilhaften Weiterbildung des erfindungsgemäßen Verfahrens ist das Medium, welches bei bestimmungsgemäßen Gebrauch des Hohlkörpers in diesem angeordnet ist, Wasser und/oder Diphyl und oder Perchlorethylen und/oder Trichlorethylen. Dabei kann das Medium entweder aus einem dieser Stoffe oder aus einer Mischung dieser Stoffe bestehen. Diese Stoffe haben sich erfindungsgemäß als für einen Wärmetransfer von einem Ende eines Wärmerohrs zu einem anderen Ende des Wärmerohrs wirksame Medien erwiesen. Wird Wasser verwendet, so wird dieses bei dem erfindungsgemäßen Verfahren vorteilhafterweise in festem Aggregatzustand, d.h. in Form von Eis in den Hohlraum bzw. einen Teilhohlraum eingebracht.

Erstaunlicherweise hat sich herausgestellt, dass selbst bei einem stoffschlüssigen Fügen oder Verschließen des Hohlkörpers unter Wärmeeinwirkung, beispielsweise bei einem Schweißverfahren, ein Eisvolumen in der Aufnahmeeinrichtung trotz der Wärmeinwirkung auf die Teilkörper bzw. Körper so langsam schmilzt, dass ein Entweichen von Wasser oder Wasserdampf während des Verfahrens vermieden wird. Da ein Reibschweißverfahren nur eine geringe Zeit zur Durchführung benötigt, hat sich ein solches Verfahren als besonders vorteilhaft herausgestellt, da bei diesem Verfahren das Medium nicht genug Zeit hat, um zu schmelzen oder zu verdampfen, so dass ein Entweichen des Mediums wirksam verhindert werden kann.

Die Aufnahmeeinrichtung weist dabei vorteilhafter Weise eine hülsenartige, kugelige oder rotationselliptische Raumform auf. Zusätzlich oder alternativ ist die Aufnahmeeinrichtung vorteilhafter Weise gitter- und/oder netzartig ausgebildet. Diese Ausgestaltung sorgt dafür, dass das Medium in teilfestem oder festem Zustand von der Aufnahmeeinrichtung gehalten wird, in flüssigem oder gasförmigem Zustand jedoch nicht oder kaum mehr von der Aufnahmeeinrichtung gehalten wird, so dass beispielsweise bei einer Anwendung als Wärmerohr ein freies Fließen und/oder Hin- und Herschwappen des Mediums möglich ist.

Um zusätzlich sicherzustellen, dass die Aufnahmeeinrichtung und das darin angeordnete Medium nicht in den Bereich des stoffschlüssigen Verschließens oder Fügens gelangt, ist erfindungsgemäß vorgesehen, dass die Aufnahmeeinrichtung federnd vorgespannt, insbesondere in einer Radialrichtung vorgespannt, eingesetzt wird. Ist der Körper oder ein Teilkörper als rohrartiges Bauteil ausgebildet, so ist die Aufnahmeeinrichtung vorteilhafter Weise in Radialrichtung vorgespannt oder vorspannbar, so dass diese in den Hohlraum oder Teilhohlraum eingesetzt werden kann und dann durch die wirkende radiale Klemmkraft einen eine für die Durchführung ausreichenden Halt an der Innenwandung des Körpers oder des Teilkörpers besitzt. Das Verlagern der Aufnahmeeinrichtung im Hohlraum oder Teilhohlraum wird dadurch erschwert, wodurch sichergestellt wird, dass das Medium nicht in den Bereich der stoffschlüssigen Verbindung oder stoffschlüssigen Fügung gelangt. Die erfindungsgemäße Kolbenstange weist einen druckdichten Hohlkörper mit einem hohlraumbildenden Teilkörper oder einem einen Hohlraum aufweisenden Körper auf. Der Hohlkörper ist stoffschlüssig verschlossen, wobei auch ein aus zwei oder mehreren Teilkörpern gefügter Hohlkörper als verschlossen gilt. Der Hohlraum des Hohlkörpers enthält ein Medium, dass bei bestimmungsgemäßem Gebrauch des Hohlkörpers flüssig und/oder gasförmig ist.

Anders als bei bekannten Kolbenstangen besteht bei der erfindungsgemäßen Kolbenstange nicht die Gefahr, dass sich der Kolben durch Rüttelbewegungen von der Kolbenstange löst. Darüber hinaus ist die Dichtigkeit der erfindungsgemäßen Kolbenstange deutlich besser als bei herkömmlichen Kolbenstangen, die ein Medium in einem Hohlraum aufweisen. Die erfindungsgemäße Kolbenstange lässt sich vorteilhafter Weise nach dem erfindungsgemäßen Verfahren in einer der obigen Ausführungen herstellen. Dadurch wird eine wirtschaftliche Herstellung von Kolbenstangen mit einem druckdichten Hohlkörper, in dem sich ein Medium befindet, möglich.

Bei einer vorteilhaften Weiterbildung der erfindungsgemäßen Kolbenstange weist der Hohlraum in zumindest einem Endbereich eine Rückhalteeinrichtung für das Medium und/oder eine das Medium aufnehmende Aufnahmeeinrichtung auf. Diese Rückhalteeinrichtung bewirkt, dass bei der Herstellung der Kolbenstange das Medium bzw. die Aufnahmeeinrichtung in dem Endbereich verbleibt und somit nicht in die Nähe des Bereiches gelangt, in dem die stoffschlüssige Fügung bzw. das stoffschlüssige Verschließen vorgenommen wird. Eine solche Rückhalteeinrichtung kann auch im Rahmen des erfindungsgemäßen Verfahrens in dem Hohlraum oder einen Teilhohlraum, insbesondere in einem jeweiligen Endbereich des Hohlraums oder des Teilhohlraums, vorgesehen werden.

Vorteilhafter Weise ist die Rückhalteeinrichtung als erweiterter Bereich des Hohlraums oder eines Teilhohlraums ausgebildet und weist weiter vorteilhaft Haltemittel, z.B. in Form einer Halteschulter, eines Haltekragens oder eines Haltekonus auf. Diese Elemente verstärken den Rückhalteeffekt der Rückhalteeinrichtung, wodurch zusätzlich sichergestellt wird, dass das Medium während der Herstellung in dem Endbereich verbleibt.

Bei einer weiteren vorteilhaften Weiterbildung der erfindungsgemäßen Kolbenstange weist die Rückhalteeinrichtung einen aufgerauten Oberflächenbereich auf. Dadurch entsteht ein größerer Widerstand für das Medium oder die Aufnahmeeinrichtung hinsichtlich einer Bewegung aus dem Endbereich weg, was wiederum eine solche Bewegung verhindert.

Bei einer vorteilhaften Weiterbildung der erfindungsgemäßen Kolbenstange weist der Hohlraum in zumindest einen Endbereich eine Rippen- und/oder Lamellenstruktur auf. Diese Struktur kann beispielsweise in Form eines Gewindes oder in Form von Längsrillen oder Längsstegen vorliegen. Diese Rippen- oder Lamellenstruktur kann einerseits ebenfalls eine Bewegung des Mediums oder der Aufnahmeeinrichtung aus dem Endbereich weg verhindern oder verzögern. Ein weiterer wesentlicher Vorteil der Rippen- oder Lamellenstruktur ist jedoch, dass ein verbesserter Wärmeübertrag zwischen dem Medium und dem Hohlkörper ermöglicht wird, da durch die Rippen- oder Lamellenstruktur ein größerer Oberflächenbereich des Hohlkörpers, der mit dem Medium im Kontakt stehen kann, zur Verfügung steht. Dies gilt sowohl für die Übertragung von Wärme an einem Ende auf das Medium als auch von Wärme von dem Medium auf ein anderes Ende der Kolbenstange.

Als besonders vorteilhaft hat sich die Verwendung der erfindungsgemäßen Kurbelstange in einer Hubkolbenmaschine, insbesondere einem Kurbelschlaufenmotor, insbesondere zur Ausbildung von Kolbenstangen einer Kurbelschlaufe erwiesen. Durch die erfindungsgemäße Kolbenstange ist bei diesen Anwendungen eine Wärmeabführung von dem Kolben möglich und die Kolbenstange ist gegenüber bekannten Kolbenstangen mit einer Wärmeabfuhrfunktion weniger verschleißanfällig und wartungsärmer.

Nachfolgend wird die Erfindung anhand der Zeichnung beispielhaft näher erläutert. Es zeigen dabei
- Figur 1: eine teilweise aufgeschnittene Draufsicht eines Kurbelschlaufenmotors mit erfindungsgemäßen Kolbenstangen;
- Figur 2: eine Detailansicht eines Verbunds einer Kurbelschlaufe, einer erfindungsgemäßen Kolbenstange und eines Kolbens;
- Figur 3: die Einzelteile eines durch das erfindungsgemäße Verfahren hergestellten Hohlkörpers in Form einer Kolbenstange zu Beginn des Verfahrens;
- Figur 4: eine weitere Ausführungsform eines durch das erfindungsgemäße Verfahren hergestellten Hohlkörpers zu Beginn des Verfahrens;
- Figur 5: eine weitere Ausführungsform eines durch das erfindungsgemäße Verfahren hergestellten Hohlkörpers zu Beginn des Verfahrens;
- Figur 6: eine Aufnahmeeinrichtung zur Verwendung in dem erfindungsgemäßen Verfahren mit darin eingesetztem Medium;
- Figur 7: eine weitere Ausführungsform einer Aufnahmeeinrichtung für das Medium zur Verwendung in dem erfindungsgemäßen Verfahren.
- Figur 8: schematisch einen Längsschnitt durch Teilkörper mit einer weiteren Ausführungsform einer eingesetzten Aufnahmeeinrichtung für das Medium zur Verwendung in dem erfindungsgemäßen Verfahren.
- Figur 9: schematisch einen Längsschnitt durch Teilkörper mit einer weiteren Ausführungsform einer eingesetzten Aufnahmeeinrichtung für das Medium zur Verwendung in dem erfindungsgemäßen Verfahren.
- Figur 10: schematisch einen Längsschnitt durch Teilkörper mit einer weiteren Ausführungsform einer eingesetzten Aufnahmeeinrichtung für das Medium zur Verwendung in dem erfindungsgemäßen Verfahren.
- Figur 11: schematisch einen Längsschnitt durch Teilkörper mit einer weiteren Ausführungsform einer eingesetzten Aufnahmeeinrichtung für das Medium zur Verwendung in dem erfindungsgemäßen Verfahren.
- Figur 12: schematisch eine perspektivische Ansicht auf eine weitere Ausführungsform einer zur Verwendung in dem erfindungsgemäßen Verfahren geeigneten Aufnahmeeinrichtung.
- Fig. 13A,: 13B die Herstellung eines Hohlkörpers gemäß einer Ausführungsform des erfindungsgemäßen Verfahrens

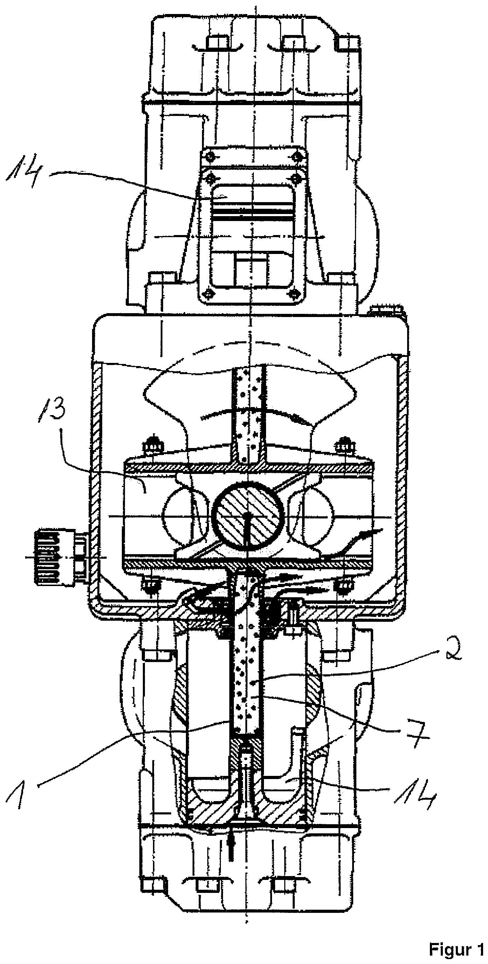

Die Figur 1 zeigt einen Kurbelschlaufenmotor mit zwei Arbeitszylindern, in denen jeweils ein Kolben 14 läuft. Jeder der Kolben 14 ist durch eine erfindungsgemäße Kolbenstange 1 mit einer Kurbelschlaufe 13 des Kurbelschlaufenmotors verbunden. In Figur 1 befinden sich der untere Zylinder am oberen und der obere Zylinder am unteren Totpunkt des Kreisprozesses des Kurbelschlaufenmotors.

Beim Betrieb des Kurbelschlaufenmotors bewegen sich die Kolben 14 zusammen mit den Kolbenstangen 1 und der Kurbelschlaufe 13 hin und her, wodurch ein sich in einem jeweiligen Hohlraum 7 der Kolbenstangen 1 befindliches Medium 2 hin und her bewegt wird. Bei dieser Bewegung nimmt das Medium 2, welches hier Wasser ist, von dem Kolben 14 Wärme auf und verdampft dabei. Anschließend wird das Medium 2 durch die Bewegung des Verbunds der Kurbelschlaufe 13 mit den Kolbenstangen 1 und den Kolben 14 in Richtung der Kurbelschlaufe 13 bewegt und gibt dort Wärme an die Umgebung der Kurbelschlaufe 13 ab. Zur Verbesserung der Wärmeabführung kann die Kurbelschlaufe 13 z. B. durch ein Ölbad oder einen Ölstrahl gekühlt werden. In den beiden Zylindern verläuft dieser Prozess gegenläufig, d. h. während sich das Medium 2 in der einen Kolbenstange 1 an dem kolbenseitigen Ende der Kolbenstange 1 erwärmt, gibt das Medium 2 der anderen Kolbenstange 1 Wärme an die Umgebung der Kurbelschlaufe 13 ab.

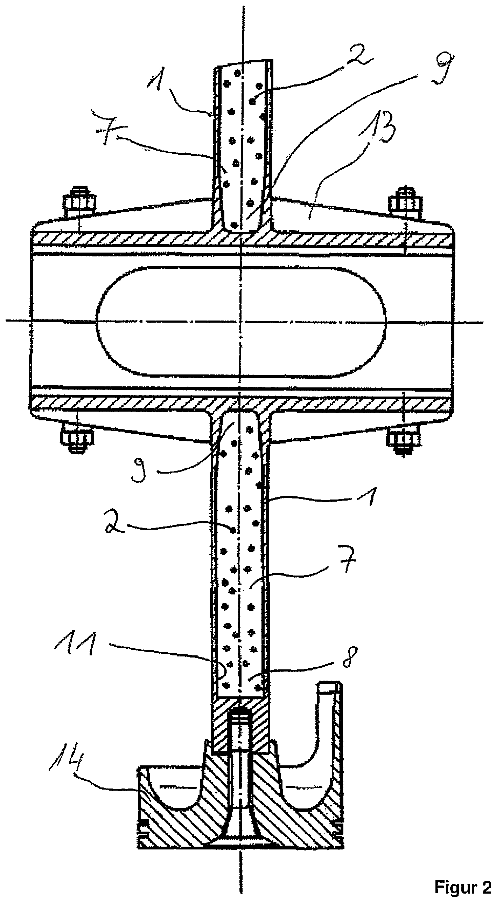

Die Figur 2 zeigt detaillierter den Aufbau des Verbunds aus Kurbelschlaufe 13, Kolbenstangen 1 und auf einer Seite auch eines Kolbens 14. Im Folgenden wird nur auf die untere Hälfte des gezeigten Verbunds eingegangen, da die obere Hälfte entsprechend aufgebaut ist. Die Kolbenstange 1 weist einen Hohlraum 7 auf, der sich über einen großen Teil der Kolbenstange 1 in eine Längsrichtung erstreckt. In dem Hohlraum 7 ist ein Medium 2, hier Wasser, angeordnet. Aufgrund der Betriebstemperaturen des Kurbelschlaufenmotors ist das Wasser bei bestimmungsgemäßem Gebrauch der Kolbenstange flüssig und/oder gasförmig. Insbesondere erwärmt sich das Medium 2 in einem Endbereich 8 der Kolbenstange 1 durch die von dem Kolben 14 ausgestrahlte bzw. die über die Kolbenstange 1 zugeleitete Wärme, so dass das Medium 2 in den gasförmigen Aggregatszustand übergeht.

Durch die nachfolgende Bewegung des Verbunds aus Kurbelschlaufe 13, Kolbenstangen 1 und Kolben 14 wird das Medium 2 in den anderen Endbereich 9 der Kolbenstange 1 bewegt, wo das Medium 2 Wärme an den angrenzenden Bereich der Kolbenstange 1 sowie die Kurbelschlaufe 13 und den Umgebungsbereich abgibt. Im Anschluss daran bewegt sich der Verbund in die entgegengesetzte Richtung, wodurch das Medium 2 wieder in den Endbereich 8 bewegt wird und erneut Wärme aufnehmen kann.

In dem Endbereich 8 der Kolbenstange 1 ist die Wandung des Hohlraums 7 mit einem aufgerauten Oberflächenbereich 11 versehen. Dieser Oberflächenbereich 11 bewirkt bei der Herstellung der erfindungsgemäßen Kolbenstange 1 ein Zurückhalten des in teilfestem oder festem Zustand befindlichen Mediums 2, behindert jedoch den Fluss des Mediums 2 bei bestimmungsgemäßem Gebrauch nicht. Vielmehr verbessert der Oberflächenbereich 11 die Wärmeübertragung zwischen dem kolbenseitigen Ende der Kolbenstange 1 und dem sich in dem Endbereich 8 befindlichen Medium 2, da durch die Aufrauung eine größere Fläche zur Wärmeübertragung zur Verfügung steht.

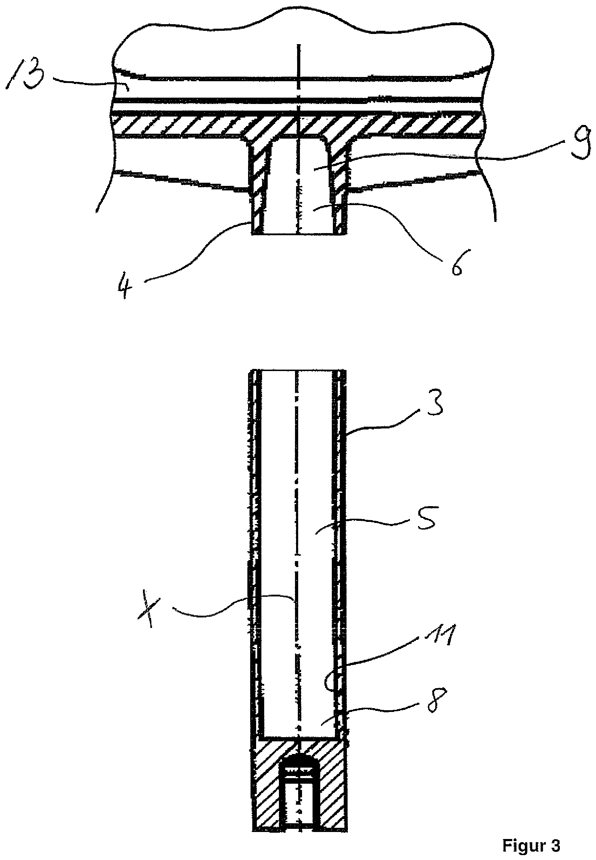

Die Kolbenstange 1 gemäß Figur 2 wurde durch das erfindungsgemäße Verfahren hergestellt. Zu Beginn des erfindungsgemäßen Verfahrens waren dabei zwei Teilkörper 3,4 vorhanden, in denen jeweils ein Teilhohlraum 5,6 vorhanden war. Diese Teilkörper 3,4 sind in Figur 3 dargestellt.

Der Teilkörper 3 weist dabei den Teilhohlraum 5 und den Endbereich 8 mit z. B. einem aufgerauten Oberflächenbereich 11 auf. In dem zweiten Teilkörper 4 sind der Teilhohlraum 6 und der Endbereich 9 vorgesehen. Der Teilkörper 4 ist einstückig mit der Kurbelschlaufe 13 hergestellt und besteht im Wesentlichen aus einem kurzen, rohrförmigen Körper, der an einem Ende durch eine Wandung der Kurbelschlaufe 13 verschlossen ist.

Die Verbindung von den zwei Teilkörpern 3,4 wird gemäß dem erfindungsgemäßen Verfahren folgendermaßen durchgeführt:
Zunächst wird das Medium 2 in teilfestem oder festem Zustand, beispielsweise als Eiszäpfchen, zusammen mit und gehalten von einer Aufnahmeeinrichtung 12 in den Teilhohlraum 5 des Teilkörpers 3 eingesetzt. Anschließend wird der Teilkörper um seine Längsachse X in Rotation versetzt und aus der in Figur 3 gezeigten Position auf den Teilkörper 4 zubewegt. Durch die bei der Berührung der Teilkörper 3, 4 entstehende Wärme und durch einen Pressdruck der Teilkörper 3, 4 gegeneinander werden die Teilkörper 3, 4 miteinander reibverschweißt. Bis zu dem Zeitpunkt, an dem die Reibschweißung abgeschlossen ist, ist das Medium 2 noch nicht geschmolzen, so dass dieses während des gesamten Herstellungsprozesses in dem Endbereich 8 verblieben ist und daher nicht aus dem entstandenen Hohlraum 7 oder den Teilhohlräumen 5, 6 entweichen konnte.

Der Teilkörper 3 ist an seinem kolbenseitigen Ende mit einer Gewindebohrung versehen, an der der Kolben 14 befestigt werden kann. Während im Stand der Technik für die Verbindung der Kolbenstange mit dem Kolben ein Stopfen verwendet wurde, kann die erfindungsgemäße Kolbenstange direkt durch eine Schraubverbindung mit dem Kolben verbunden werden. Dadurch hält diese Verbindung deutlich länger als die aus dem Stand der Technik bekannte Verbindung. Durch die stoffschlüssige Verbindung der zwei Teilkörper 3, 4 ist der entstandene Hohlkörper 1 bzw. die Kolbenstange 1 druckdicht für das Medium 2, wodurch ein Entweichen des Mediums 2 aus dem Hohlraum 7 verhindert wird.

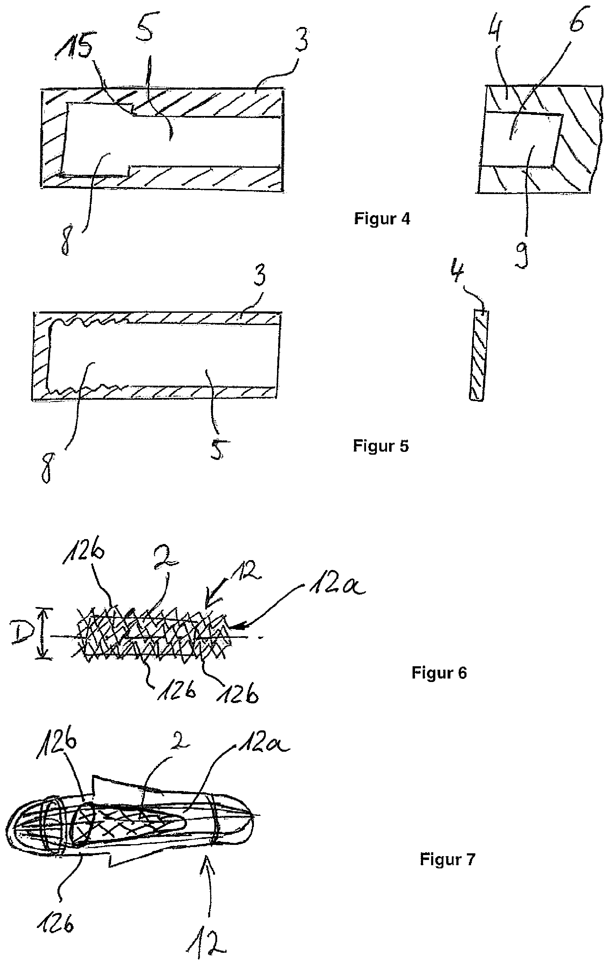

Die Figur 4 zeigt eine weitere Ausführungsform zweier Teilkörper 3, 4 mit ihren Teilhohlräumen 5, 6. In dem Endbereich 8 des Teilkörpers 3 ist eine Rückhalteeinrichtung für die Aufnahmeeinrichtung 12 des Mediums 2 vorgesehen, die als erweiterter Bereich des Hohlraums 7 ausgebildet ist. Wird das Medium 2 zusammen mit der Aufnahmeeinrichtung 12 bei der erfindungsgemäßen Herstellung des druckdichten Hohlkörpers 1 in den Teilhohlraum 5 des Teilkörpers 3 eingesetzt, so kann die Aufnahmeeinrichtung 12 in dem erweiterten Bereich in dem Endbereich 8 zum Liegen kommen. Durch die als Haltekragen ausgebildeten Haltemittel 15 wird verhindert, dass die Aufnahmeeinrichtung 12 mit dem Medium 2 ungewollt aus dem Endbereich 8 in einen vorderen Bereich des Teilkörpers 3 gelangt. Auf diese Weise wird sichergestellt, dass bei dem anschließenden Reibschweißverfahren das Medium 2 nicht aus dem Teilhohlraum 5 entweichen kann oder ungewollt schmelzen oder anschmelzen kann.

In der Figur 5 ist eine weitere Ausführungsform der Teilkörper 3, 4 zu Beginn des erfindungsgemäßen Verfahrens dargestellt. Der Teilkörper 4 weist dabei keinen Hohlraum auf. Somit wird der spätere Hohlraum 7 des Hohlkörpers 1 durch den Teilhohlraum 5 des Teilkörpers 3 gebildet. In dem Endbereich 8 des Teilhohlraums 5 ist eine Rippenstruktur an der Innenwandung des Teilkörpers 3 vorhanden, die durch ein sich dort befindliches Gewinde gebildet wird. Diese Rippenstruktur vergrößert die Oberfläche mit der das Medium 2 bei bestimmungsgemäßem Gebrauch des Hohlkörpers 1 mit dem Teilkörper 3 in Verbindung steht, was die Wärmeübertragung zwischen dem Medium 2 und dem Teilkörper 3 verbessert. Diese im Zusammenhang mit dem Teilkörper 3 gemäß Figur 5 beschriebenen Merkmale sind ohne Weiteres auch auf die Teilkörper 3, 4 gemäß der Figuren 2 bis 4 übertragbar.

In der Figur 6 ist eine erste Ausführungsform der Aufnahmeeinrichtung 12 für das Medium 2 dargestellt. Die Aufnahmeeinrichtung 12 ist gitterartig ausgebildet und weist eine hülsenartige Raumform mit einem Durchmesser D auf. Die Aufnahmeeinrichtung 12 ist in Radialrichtung vorgespannt, d.h. mit einer Kraft von außen in Richtung ihrer Längsachse beaufschlagt, in einem der Teilhohlräume 5, 6 einsetzbar, so dass sich der Durchmesser D verkleinert. Wird die Aufnahmeeinrichtung 12 bei der erfindungsgemäßen Herstellung des Hohlkörpers 1 in einen Teilhohlraum 6 oder Hohlraum 7 eingebracht, so wirkt die Vorspannung als Haltekraft der Aufnahmeeinrichtung 12 in den Teilhohlraum 5,6 oder Hohlraum 7. Die Aufnahmeeinrichtung 12 hält somit das Medium 2 und legt dieses an einem Ort in den Teilhohlraum 6 oder Hohlraum 7 fest. Dadurch wird verhindert, dass sich das Medium 2 bei der Herstellung des druckdichten Hohlkörpers 1 in dem Bereich, der gefügt oder verschlossen wird, bewegt. Die Aufnahmeeinrichtung 12 kann beispielsweise als Drahtgeflecht aus einem Metalldraht oder einem Kunststoffdraht ausgebildet sein. Durch das Vorsehen der Aufnahmeeinrichtung 12 wird das Medium 2 in festem oder teilfestem Zustand beabstandet von einer Innenwandung des Hohlraums 7 oder der Teilhohlräume 6, 5 gehaltert, so dass ein unbeabsichtigtes Schmelzen oder Anschmelzen an der Innenwandung, die beispielsweise Umgebungstemperatur besitzt, innerhalb der Zeit, bis das stoffschlüssige Fügen stattgefunden hat, zuverlässig verhindert oder in akzeptablen Grenzen gehalten wird. Durch die Aufnahmeeinrichtung 12 entsteht somit zwischen dem Medium 2 in festem oder teilfestem Zustand, z. B. wenn das Medium aus Eis besteht, ein Luftpolster, welches isolierend wirkt, so dass der Wärmeübergang von dem Teilkörper 3, 4 in ausreichendem Maße unterbunden ist. Dies gelingt auch, wenn die Aufnahmeeinrichtung 12 aus einem Drahtgeflecht bestehend aus einem Metalldraht gebildet ist, da Berührungspunkte zwischen einer solchen Aufnahmeeinrichtung 12 und den Teilkörpern 3, 4 kleinflächig sind und somit nur ein geringer Wärmeübergang stattfinden kann.

Die Figur 7 zeigt eine weitere Ausführung der Aufnahmeeinrichtung 12 für die Verwendung in einem erfindungsgemäßen Verfahren. Die Aufnahmeeinrichtung 12 weist dabei eine im Wesentlichen rotationselyptische Raumform auf und bildet eine Art Gitterkäfig um das Medium 2. Aus der Gitterstruktur stehen einzelne Ärmchen hervor, die ebenfalls eine Haltekraft in einem Teilhohlraum 5, 6 oder Hohlraum 7 bewirken, der die Aufnahmeeinrichtung 12 und somit das Medium 2 örtlich in dem Teilhohlraum 6 oder Hohlraum 7 festlegt.

Da das Medium 2 bei bestimmungsgemäßem Gebrauch des Hohlkörpers 1 in flüssigem oder gasförmigem Zustand vorliegt, behindert die Aufnahmeeinrichtung 12 die Bewegung des Mediums 2 von einem Endbereich 8 zum anderen Endbereich 9 bei bestimmungsgemäßen Gebrauch nicht. Vorteilhafter Weise besteht die Aufnahmeeinrichtung 12 aus einem Material, welches bei den Temperaturen, die bei bestimmungsgemäßem Gebrauch des Hohlkörpers 1 auftreten, nicht schmilzt. Schmelzendes Material könnte sich an die Innenwandung des Hohlkörpers 1 legen und somit den Wärmeübertrag auf das bzw. von dem Medium 2 behindern. Alternativ kann die Aufnahmeeinrichtung 12 aus einem Material gebildet sein, welches zwar bei den Temperaturen, die bei bestimmungsgemäßem Gebrauch des Hohlkörpers 1 auftreten, schmilzt, welches jedoch eine ausreichend große Wärmeleitfähigkeit besitzt, so dass der Wärmeübertrag zwischen dem Hohlkörper 1 und dem Medium 2 nicht behindert wird.

Weiterhin kann es auch vorteilhaft sein, dass die Aufnahmeeinrichtung 12 aus einem Material gebildet ist, welches bei den Temperaturen, die bei bestimmungsgemäßen Gebrauch des Hohlkörpers 1 auftreten oder bei gegenüber diesen Temperaturen höheren Temperaturen schmilzt und sich in geschmolzenen Zustand, beispielsweise unter Schwenken oder Taumeln des Hohlkörpers 1 an die Innenwandung des Hohlkörpers 1 anlegt und antikorrosive Eigenschaften bei möglichst guter Wärmeleitung aufweist. Bei einer derartigen Materialwahl gelingt es somit in einfacher Art und Weise gegebenenfalls ein für das Material des Hohlkörpers 1 aggressives Medium 2 einzusetzen, ohne dass ein unerwünschter korrosiver Angriff des Materials des Hohlkörpers 1 erfolgt.

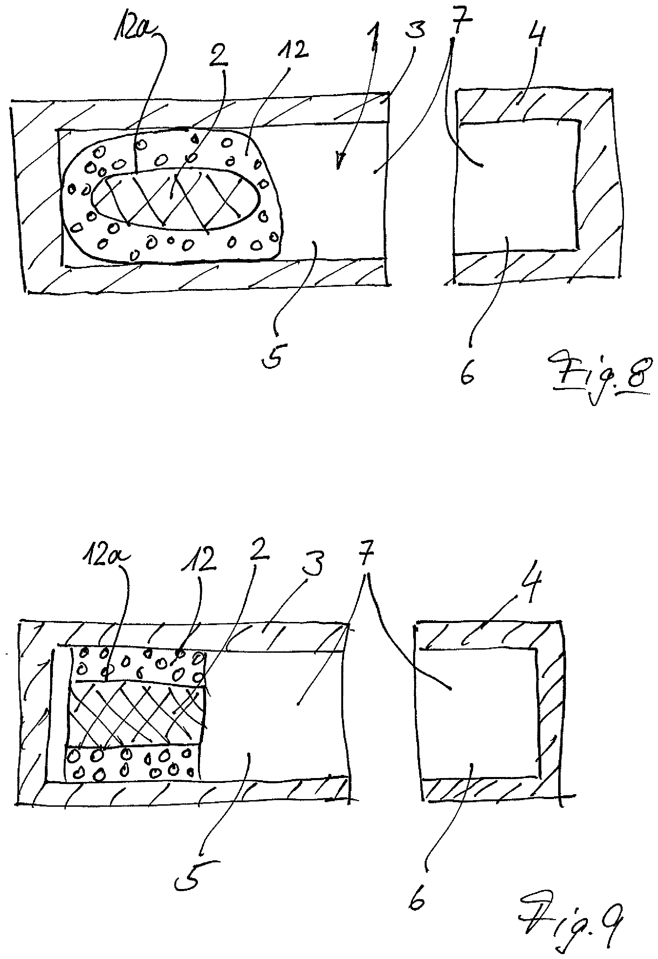

Eine weitere Ausführungsform einer zur Verwendung im erfindungsgemäßen Verfahren geeigneten Aufnahmeeinrichtung 12 (Figur 8) ist beispielsweise aus einem offenporigen, insbesondere schaumartigen Material ausgebildet, in dessen Inneren das Medium 2 in festem oder teilfestem Zustand eingebracht ist. Das offenporige Material kann unter radialem Verquetschen in den Innenraum des Teilhohlraumes des Teilkörpers 3 eingesetzt werden und verklemmt sich an dessen Innenwandung. Dabei wird die Aufnahmeeinrichtung 12 aus offenporigem Material als Isolator zwischen dem Teilkörper 3 und dem Medium 2 in festem oder teilfestem Zustand. Die Isolationswirkung ist dabei derart gewählt, dass ein stoffschlüssiges Fügeverfahren der Teilkörper 3 und 4 durchgeführt werden kann, ohne dass das Medium 2 in festem oder teilfestem Zustand in unzulässigem Maße schmilzt. Nachdem die Teilkörper 3, 4 miteinander stoffschlüssig gefügt wurden, kann durch Erwärmung das Medium 2 ohne Weiteres schmelzen oder in einen gasförmigen Zustand übergehen und durch die offenporige Struktur der Aufnahmeeinrichtung 12 entweichen, ohne dass es zwingend notwendig ist, die Aufnahmeeinrichtung 12 vor Inbetriebnahme des Hohlkörpers 1 zu zerstören.

Damit die offenporige Struktur, die z. B. aus einem leichten Schaum gebildet werden kann, im Betrieb des Hohlkörpers 1 die Wärmeübertragung des schwappenden oder fließenden, flüssigen oder gasförmigen Mediums 2 nicht behindert, ist es beispielsweise aus einem Material gebildet, welches im Betrieb oder bereits bei einer Temperatur niedriger als die Betriebstemperatur des Hohlkörpers 1 schmilzt und sich zumindest in einem Teilbereich an eine Innenwandung des Hohlraumes 1 anlegt. Dadurch wird die gesamte Länge des Innenhohlraumes frei für ein Hin- und Herfließen oder Hin- und Herschwappen des Mediums 2 in flüssigem oder gasförmigem Zustand.

Eine weitere Ausführungsform einer für das erfindungsgemäße Verfahren einsetzbaren Aufnahmeeinrichtung 12 ist in Figur 9 dargestellt. Es handelt sich hierbei beispielsweise um ein geschlossen-poriges Schaummaterial, welches schlauchartig ausgebildet ist und das Medium 2 in festem oder teilfestem Zustand insbesondere zumindest teilweise radial umgibt, wobei Stirnseiten der Aufnahmeeinrichtung 12 offen sind. Bei einer derartigen Ausgestaltung der Aufnahmeeinrichtung 12 bewirkt die Aufnahmeeinrichtung 12 jedenfalls eine ausreichende Isolierung des festen oder teilfesten Mediums 2 gegenüber dem Teilkörper 3 und ist andererseits aufgrund der in Längsrichtung offenen Gestaltung für das Hin- und Herfließen des Mediums 2 bzw. das Hin- und Herschwappen des Mediums 2 im Betrieb des Hohlkörpers 1 nicht bzw. ausreichend wenig hinderlich.

Alternativ zu der in Figur 9 beschriebenen porösen Ausbildung der Aufnahmeeinrichtung 12 kann diese beispielsweise aus einem elastischen Material, wie z. B. einem elastischen Kunststoff nicht poröser Art ausgebildet sein. Eine derartige Aufnahmeeinrichtung besitzt beispielsweise ebenfalls einen endseitig offenen Innenbereich, in dem das Medium 2 in festem oder teilfestem Zustand einbringbar ist. Zum klemmenden Halten der Aufnahmeeinrichtung 12 relativ zum Teilkörper 1 können beispielsweise radial umlaufende oder in Längsrichtung laufende Lippen angespritzt sein, die federnd vorgespannt an der Innenseite des Teilkörpers 3 anliegen. Ebenso eignen sich selbstverständlich außenseitige, elastisch verformbare Noppen. Wesentlich für diese und die übrigen beschriebenen Ausführungsformen der Aufnahmeeinrichtung 12 ist, dass die Aufnahmeeinrichtung 12 derart ausgestaltet ist, dass sie in der Lage ist, das Medium 2 in festem oder teilfestem Zustand zu halten und gegenüber einer Wandung des Teilkörpers 3 oder des Körpers 10 zumindest für die Dauer bis das stoffschlüssige Verschließen des Hohlraumes 1 stattgefunden hat, in ausreichendem Maße zu isolieren und derart ausgebildet ist, dass das Medium 2 in flüssigem oder gasförmigem Zustand aus der Aufnahmeeinrichtung 12 entweichen kann und sich im Hohlraum 7 des Hohlkörpers 1 ausbreiten kann.

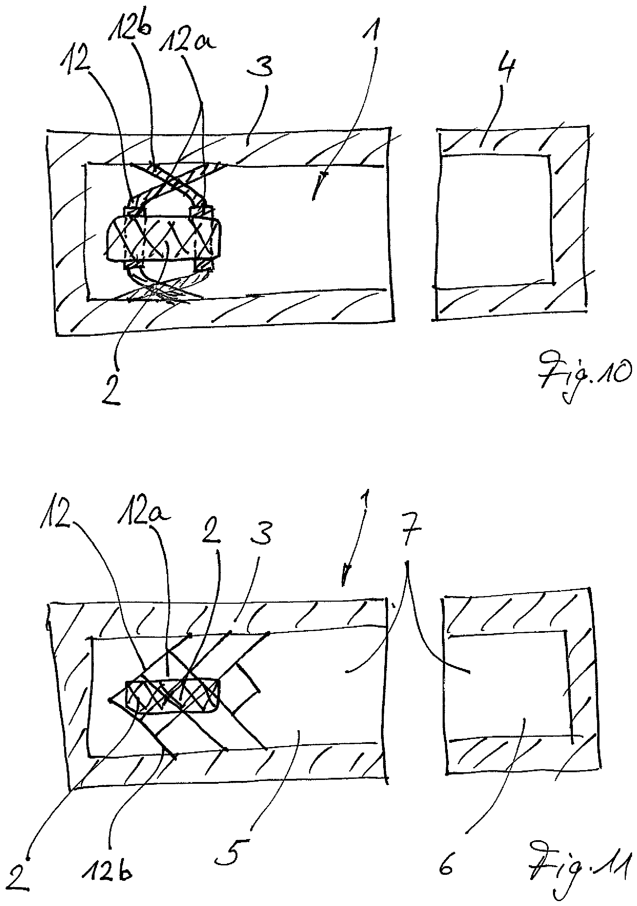

Weitere Ausführungsformen der Aufnahmeeinrichtung 12 zeigen Figur 10 und 11, denen gemeinsam ist, dass die Aufnahmeeinrichtungen eine Haltezone für das Medium 2 in festem oder teilfestem Zustand aufweisen, mittels welcher ein insbesondere beabstandetes Halten des Mediums 2 in festem oder teilfestem Zustand von einer Wandung des Teilkörpers 3 möglich ist. Durch eine im Wesentlichen offene und/oder für gasförmiges oder flüssiges Medium 2 durchlässige gitter-, netzartige oder mit Öffnungen versehene Gestaltung der Aufnahmeeinrichtung 12 kann das Medium 2 in flüssigem oder gasförmigem Zustand ohne Weiteres aus der Haltezone der Aufnahmeeinrichtung 12 entweichen. Die Aufnahmeeinrichtung 12 weist beispielsweise federnde Arme auf, mittels denen die Aufnahmeeinrichtung 12 im Teilhohlraum 5 des Teilkörpers 3 klemmend und/oder verhakend aufnehmbar ist.

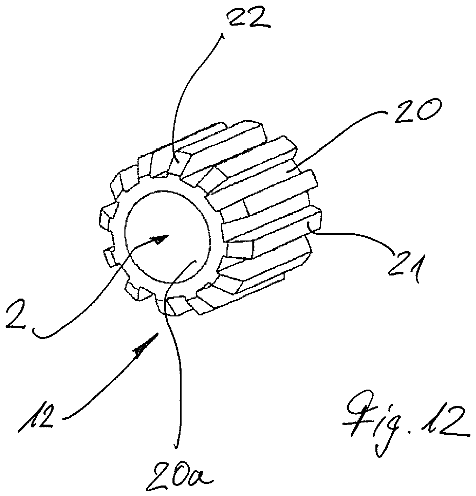

Eine weitere Ausführungsform einer für das erfindungsgemäße Verfahren verwendbaren Aufnahmeeinrichtung 12 zeigt Figur 12 in einer perspektivischen Ansicht. Eine derartige Aufnahmeeinrichtung 12 weist beispielsweise einen zylindrischen Grundkörper 20 auf, welcher in seinem Innenraum 20a hohl ist und in einem solchen Innenbereich 20a zur Aufnahme des Mediums 2 in festem oder teilfestem Zustand eingerichtet ist. Außenseitig radial umlaufend ist eine Vielzahl von Halterippen 21 vorgesehen, welche im Wesentlichen in Längsrichtung des zylindrischen Grundkörpers verlaufen. Endseitig weisen diese Halterippen 21 Anschrägungen 22 auf, um ein Einführen der Aufnahmeeinrichtung 12 in einen Teilkörper 3 oder 4 zu erleichtern. Die Halterippen 21 sind dabei bevorzugt elastisch verformbar und/oder plastisch verformbar ausgebildet und dienen als Festlegemittel der Aufnahmeeinrichtung 12 innerhalb eines Teilhohlraums 5 oder 6. Selbstverständlich können die Halterippen 21 auch radial umlaufend in den Grundkörper 20 angeordnet sein. Bevorzugt sind die Halterippen 21 gegenüber dem Grundkörper 20 elastisch biegbar ausgebildet, um als federnde Elemente zur Klemmung der Aufnahmeeinrichtung 12 im Teilkörper 3, 4 oder im Körper 10 dienen zu können.

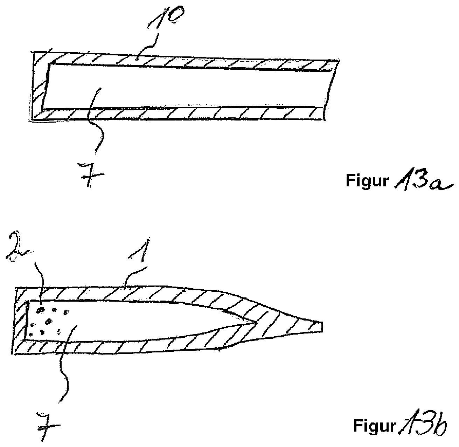

In den Figuren 13a und 13b ist eine Alternative des erfindungsgemäßen Verfahrens zur Herstellung eines druckdichten Hohlkörpers 1 dargestellt. Die Figur 13a zeigt dabei einen Körper 10, der im Wesentlichen rohrförmig ausgebildet ist und an einem Ende verschlossen ist. Der Körper 10 weist somit einen Hohlraum 7 auf. Bei dem erfindungsgemäßen Verfahren wird nun das Medium 2 in teilfestem oder festem Zustand in den Hohlraum 7 eingegeben. Anschließend wird der Körper 10 an dem offenen Ende stoffschlüssig verformt. Diese Verformung kann beispielsweise durch Erwärmen dieses Endes und anschließendes Verpressen erfolgen. Der durch diese Prozesse hergestellte Hohlkörper 1 weist somit einen Hohlraum 7 mit darin enthaltenem Medium 2 auf. Das Medium 2 kann nicht aus dem Hohlraum 7 entweichen, wodurch der Hohlkörper 1 druckdicht ist.
Neben den anderen bereits beschriebenen Ausführungsformen eignet sich diese Ausführungsform besonders für eine Ausbildung der Aufnahmeeinrichtung 12 aus einem Hartwachs, Paraffin oder dergleichen wachsartigen Werkstoffen.

### Bezugszeichenliste

- 1: Hohlkörper/Kolbenstange
- 2: Medium
- 3: Teilkörper
- 4: Teilkörper
- 5: Teilhohlraum
- 6: Teilhohlraum
- 7: Hohlraum
- 8: Endbereich
- 9: Endbereich
- 10: Körper
- 11: Oberflächenbereich
- 12: Aufnahmeeinrichtung
- 13: Kurbelschlaufe
- 14: Kolben
- 15: Haltemittel

- 12a: Aufnahmebereich
- 12b: federnde Elemente
- 20: zylindrischer Grundkörper
- 21: Halterippen
- 22: Anschrägungen

- X: Längsachse
- D: Durchmesser

## Patentansprüche

1. Verfahren zur Herstellung eines für ein vorbestimmtes Medium (2) druckdichten Hohlkörpers (1) durch Fügen von zumindest zwei Teilkörpern (3,4), die in gefügtem Zustand den Hohlkörper (1) bilden, der das Medium (2) in bestimmungsgemäßem Gebrauch des Hohlkörpers (1) in gasförmigem und/oder flüssigem Zustand enthält, wobei die zumindest zwei Teilkörper (3,4) mittels eines unter Umgebungsdruck erfolgreich durchführbaren, stoffschlüssigen Fügeverfahrens stoffschlüssig gefügt werden, wobei in zumindest einen Teilhohlraum (5,6) zumindest eines Teilkörpers (3,4) vor dem Durchführen des stoffschlüssigen Fügens das Medium (2) in teilfestem oder festem Zustand eingesetzt wird, das Medium (2) zusammen mit einer das Medium (2) im festem oder teilfestem Zustand aufnehmenden oder haltenden Aufnahmeeinrichtung (12), aus der das Medium (2) im flüssigem oder in gasförmigem Zustand entweichen kann, eingesetzt wird und wobei danach das stoffschlüssige Fügen durchgeführt wird, **dadurch gekennzeichnet, dass** die Aufnahmeeinrichtung (12) federnd vorgespannt oder vorspannbar insbesondere in einer Radialrichtung vorgespannt oder vorspannbar, eingesetzt wird.

2. Verfahren zur Herstellung eines für ein vorbestimmtes Medium (2) druckdichten Hohlkörpers (1) durch Verschließen eines einzigen Körpers (10), der in verschlossenem Zustand den Hohlkörper (1) bildet, der das Medium (2) in bestimmungsgemäßem Gebrauch in gasförmigem und/oder flüssigem Zustand enthält, wobei der Körper (10) mittels eines unter Umgebungsdruck erfolgreich durchführbaren, stoffschlüssigen Fügeverfahrens stoffschlüssig verschlossen wird, wobei das Medium (2) zusammen mit einer das Medium (2) im festem oder teilfestem Zustand aufnehmenden oder haltenden Aufnahmeeinrichtung (12), aus der das Medium (2) im flüssigem oder in gasförmigem Zustand entweichen kann, eingesetzt wird und wobei in einen Hohlraum (7) des Körpers (10) vor dem Durchführen des stoffschlüssigen Verschließens das Medium (2) in teilfestem oder festem Zustand eingesetzt wird und wobei danach das stoffschlüssige Verschließen durchgeführt wird, **dadurch gekennzeichnet, dass** die Aufnahmeeinrichtung (12) federnd vorgespannt oder vorspannbar insbesondere in einer Radialrichtung vorgespannt oder vorspannbar, eingesetzt wird.

3. Verfahren nachAnspruch 1 oder 2 , **dadurch gekennzeichnet, dass** das stoffschlüssige Fügen oder Verschließen mittels eines Schweißverfahrens, durchgeführt wird.

4. Verfahren nach einem der vorhergehenden Ansprüche, **dadurch gekennzeichnet, dass** das Medium (2) Wasser und/oder Diphyl und/oder Perchlorethylen und/oder Trichlorethylen ist.

5. Verfahren nach einem der vorhergehenden Ansprüche, **dadurch gekennzeichnet, dass** die Aufnahmeeinrichtung (12) gitter- oder netzartig oder porös ausgebildet ist und/oder eine hülsenartige, kugelige, zylindrische oder rotationselliptische Raumform aufweist.

6. Verfahren nach einem der vorhergehenden Ansprüche, **dadurch gekennzeichnet, dass** die Aufnahmeeinrichtung (12) aus einem Poren aufweisenden Material mit geschlossenporigen Oberflächen oder offenporigen Oberflächen ausgebildet ist.

7. Verfahren nach einem der vorhergehenden Ansprüche, **dadurch gekennzeichnet, dass** die Aufnahmeeinrichtung (12) eine Aufnahmezone (12a) zur Aufnahme des Mediums (2) in festem oder teilfestem Zustand besitzt und federnde Einrichtungen (12b) besitzt, mit welchen die Aufnahmeeinrichtung (12) klemmbar oder verhakbar oder verrastbar bezüglich des Innenraums (5, 6) des Hohlraums (7) festlegbar ist, wobei das Medium (2) in teilfestem oder festem Zustand beabstandet von einer Wandung des Teilkörpers (3, 4) oder des Körpers (10) angeordnet wird.

8. Verfahren nach einem der vorhergehenden Ansprüche, **dadurch gekennzeichnet, dass** das für die Aufnahmeeinrichtung (12) verwendete Material im Betrieb schmilzt und sich als Schicht auf der Innenseite des Hohlraums (7) anlagert, so dass ein Korrosionsschutz gewährleistet ist.

9. Kolbenstange mit einem nach einem Verfahren gemäß einem der vorhergehenden Ansprüche hergestellten, druckdichten Hohlkörper (1) mit einen Hohlraum (7) bildenden Teilkörpern (3,4) oder einem einen Hohlraum (7) aufweisenden Körper (10), wobei der Hohlkörper (1) stoffschlüssig verschlossen ist und wobei der Hohlraum (7) ein Medium (2) enthält, das bei bestimmungsgemäßen Gebrauch des Hohlkörpers (1) flüssig und/oder gasförmig ist.

10. Kolbenstange gemäß Anspruch 9 , **dadurch gekennzeichnet, dass** der Hohlraum (7) eine Rückhalteeinrichtung für eine das Medium (2) aufnehmende Aufnahmeeinrichtung (12) aufweist.

11. Kolbenstange gemäß Anspruch 10 , **dadurch gekennzeichnet, dass** die Rückhalteeinrichtung als erweiterter Bereich des Hohlraums (7) ausgebildet ist und Haltemittel (15), z. B. eine Halteschulter, einen Haltekragen oder einen Haltekonus aufweist.

12. Kolbenstange gemäß Anspruch 10 oder 11 , **dadurch gekennzeichnet, dass** die Rückhalteeinrichtung einen aufgerauten Oberflächenbereich (11) aufweist.

13. Kolbenstange gemäß einem der Ansprüche 9 bis 12 , **dadurch gekennzeichnet, dass** der Hohlraum (7) als Rückhalteeinrichtung eine Rippen- oder Lamellenstruktur, z. B. in Form eines Gewindes oder in Form von Längsrillen oder Längsstegen aufweist.

14. Verwendung der Kolbenstange gemäß einem der Ansprüche 9 bis 13 in einer Hubkolbenmaschine, insbesondere einem Kurbelschlaufenmotor, insbesondere zur Ausbildung von Kolbenstangen einer Kurbelschlaufe.

## Claims

1. A method for producing a hollow body (1) that is pressure-tight for a predetermined medium (2) by joining at least two partial bodies (3, 4) that in the joined state, constitute the hollow body (1), which, with proper use of the hollow body (1), contains the medium (2) in a gaseous and/or liquid state; the at least two partial bodies (3, 4) are integrally joined by means of an integral joining method that can be successfully carried out at ambient pressure; before the integral joining is carried out, the medium (2) in a semi-solid or solid state is introduced into at least one partial cavity (5, 6) of at least one partial body (3, 4), the medium (2) is inserted together with a containing device (12), which contains or holds the medium (2) in the solid or semi-solid state and from which the medium (2) can escape in the liquid or gaseous state; and then the integral joining is carried out, **characterized in that** the containing device (12) is inserted in a resiliently prestressed or prestressable way, in particular so that it is prestressed or prestressable in a radial direction.

2. A method for producing a hollow body (1) that is pressure-tight for a predetermined medium (2) by sealing a single body (10), which in the sealed state, constitutes the hollow body (1), which with proper use, contains the medium (2) in a gaseous and/or liquid state; the body (10) is sealed by means of an integral joining method that can be successfully carried out at ambient pressure; the medium (2) is inserted together with a containing device (12), which contains or holds the medium (2) in the solid or semi-solid state and from which the medium (2) can escape in the liquid or gaseous state; and before the integral sealing is carried out, the medium (2) is introduced in a semi-solid or solid state into a cavity (7) of the body (10) and then the integral sealing is carried out, **characterized in that** the containing device (12) is inserted in a resiliently prestressed or prestressable way, in particular so that it is prestressed or prestressable in a radial direction.

3. The method according to claim 1 or 2, **characterized in that** the integral joining or sealing is carried out by means of a welding method.

4. The method according to one of the preceding claims, **characterized in that** the medium (2) is water and/or Diphenyl and/or perchloroethylene and/or trichloroethylene.

5. The method according to one of the preceding claims, **characterized in that** the containing device (12) is embodied as grid-like or net-like or porous and/or has a sleevelike, spheroidal, cylindrical, or rotationally elliptical three-dimensional shape.

6. The method according to one of the preceding claims, **characterized in that** the containing device (12) is embodied of a porous material with closed-pored surfaces or open-pored surfaces.

7. The method according to one of the preceding claims, **characterized in that** the containing device (12) has a containing zone (12a) for containing the medium (2) in a solid or semi-solid state and has resilient devices (12b) with which the containing device (12) can be immobilized in a clamping, hooking, or detent-engaging fashion relative to the interior (5, 6) of the cavity (7), with the medium (2) in the solid or semi-solid state being spaced apart from a wall of the partial body (3, 4) or body (10).

8. The method according to one of the preceding claims, **characterized in that** the material used for the containing device (12) melts during operation and accumulates on the inside of the cavity (7) in the form of a layer, thus assuring a corrosion protection.

9. A piston rod with a pressure-tight hollow body (1) that is produced by means of a method according to one of the preceding claims, with partial bodies (3, 4) that form a cavity (7) or with a body (10) that has a cavity (7), wherein the hollow body (1) is sealed in an integrally joined way and the cavity (7) contains a medium (2) that is liquid and/or gaseous with proper use of the hollow body (1).

10. The piston rod according to claim 9, **characterized in that** the cavity (7) has a supporting device for a containing device (12) that contains the medium (2).

11. The piston rod according to claim 10, **characterized in that** the supporting device is embodied as a broadened region of the cavity (7) and has retaining means (15) such as a retaining shoulder, a retaining collar, or a retaining cone.

12. The piston rod according to claim 10 or 11, **characterized in that** the supporting device has a roughened surface region (11).

13. The piston rod according to one of claims 9 through 12, **characterized in that** the cavity (7) has a support device embodied as a rib structure or laminar structure, e.g. in the form of a thread or in the form of longitudinal grooves or longitudinal struts.

14. A use of the piston rod according to one of claims 9 through 13 in a reciprocating piston engine, in particular a Scotch yoke motor, especially for embodying piston rods of a Scotch yoke mechanism.

## Revendications

1. Procédé de fabrication d'un corps creux (1) étanche à la pression pour un milieu prédéterminé (2) par assemblage d'au moins deux corps partiels (3, 4) qui, dans l'état assemblé, constituent le corps creux (1) qui contient le milieu (2) à l'état gazeux et/ou liquide lors d'une utilisation conforme du corps creux (1), dans lequel on assemble lesdits au moins deux corps partiels (3, 4) par coopération de matières au moyen d'un procédé d'assemblage par coopération de matières réalisable avec succès à la pression ambiante,
dans lequel, dans au moins un creux partiel (5, 6) d'au moins un corps partiel (3, 4), avant de réaliser l'assemblage par coopération de matières, on met en place le milieu (2) à l'état partiellement solide ou solide, on met en place le milieu (2) conjointement avec un dispositif de réception (12) recevant ou maintenant le milieu (2) à l'état solide ou partiellement solide, depuis lequel le milieu (2) peut s'échapper à l'état liquide ou gazeux, et ensuite on réalise l'assemblage par coopération de matières,
**caractérisé en ce que**
on met en place le dispositif de réception (12) en étant précontraint ou susceptible d'être précontraint par un ressort, en particulier en étant précontraint ou susceptible d'être précontraint dans une direction radiale.

2. Procédé de fabrication d'un corps creux (1) étanche à la pression pour un milieu prédéterminé (2) par fermeture d'un corps unique (10) qui, dans l'état fermé, constitue le corps creux (1) qui contient le milieu (2) à l'état gazeux et/ou liquide lors d'une utilisation conforme, dans lequel on ferme le corps (10) par coopération de matières au moyen d'un procédé d'assemblage par coopération de matières réalisable avec succès à la pression ambiante,
dans lequel on met en place le milieu (2) conjointement avec un dispositif de réception (12) recevant ou maintenant le milieu (2) à l'état solide ou partiellement solide, depuis lequel le milieu (2) peut s'échapper à l'état liquide ou gazeux, et
dans un creux (7) du corps (10), avant de réaliser la fermeture par coopération de matières, on met en place le milieu (2) à l'état partiellement solide ou solide et
ensuite on réalise la fermeture par coopération de matières,
**caractérisé en ce que**
on met en place le dispositif de réception (12) en étant précontraint ou susceptible d'être précontraint par un ressort, en particulier en étant précontraint ou susceptible d'être précontraint dans une direction radiale.

3. Procédé selon la revendication 1 ou 2, **caractérisé en ce que** l'on réalise l'assemblage ou la fermeture par coopération de matières par un procédé de soudage.

4. Procédé selon l'une des revendications précédentes, **caractérisé en ce que** le milieu (2) est de l'eau et/ou du diphényle et/ou du perchloroéthylène et/ou du trichloroéthylène.

5. Procédé selon l'une des revendications précédentes, **caractérisé en ce que** le dispositif de réception (12) est réalisé en forme de grille ou de réseau ou poreux et/ou présente une forme spatiale analogue à une douille, une sphère, un cylindre ou un ellipsoïde de révolution.

6. Procédé selon l'une des revendications précédentes, **caractérisé en ce que** le dispositif de réception (12) est réalisé en un matériau présentant des pores avec des surfaces à pores fermées ou des surfaces à pores ouvertes.

7. Procédé selon l'une des revendications précédentes, **caractérisé en ce que** le dispositif de réception (12) possède une zone de réception (12a) pour recevoir le milieu (2) à l'état solide ou partiellement solide et possède des dispositifs élastiques (12b) par lesquels le dispositif de réception (12) est susceptible d'être immobilisé par coincement ou par accrochement ou par enclenchement par rapport à l'espace intérieur (5, 6) du creux (7), et on agence le milieu (2) à l'état partiellement solide ou solide à distance d'une paroi du corps partiel (3, 4) ou du corps (10).

8. Procédé selon l'une des revendications précédentes, **caractérisé en ce que** le matériau utilisé pour le dispositif de réception (12) se fond pendant le fonctionnement et se dépose sous forme de couche sur le côté intérieur du creux (7), de manière à assurer une protection anticorrosion.

9. Tige de piston comportant un corps creux (1) étanche à la pression réalisé par un procédé selon l'une des revendications précédentes, comportant des corps partiels (34, 4) formant un creux (7) ou un corps (10) présentant un creux (7), dans laquelle le corps creux (1) est fermé par coopération de matières et le creux (7) contient un milieu (2) qui, lors d'une utilisation conforme du corps creux (1), est liquide et/ou gazeux.

10. Tige de piston selon la revendication 9, **caractérisée en ce que** le creux (7) comprend un dispositif de retenue pour un dispositif de réception (12) recevant le milieu (2).

11. Tige de piston selon la revendication 10, **caractérisée en ce que** le dispositif de retenue est réalisé sous forme de zone élargie du creux (7) et comprend des moyens de retenue (15), par exemple un épaulement de retenue, une collerette de retenue ou un cône de retenue.

12. Tige de piston selon la revendication 10 ou 11, **caractérisée en ce que** le dispositif de retenue présente une zone de surface (11) rendue rugueuse.

13. Tige de piston selon l'une des revendications 9 à 12, **caractérisée en ce que** le creux (7) comprend à titre de dispositif de retenue une structure à nervures ou à lamelles, par exemple sous la forme d'un pas de vis ou sous la forme de rainures longitudinales ou de barrettes longitudinales.

14. Utilisation d'une tige de piston selon l'une des revendications 9 à 13 dans un moteur à piston alternatif, en particulier dans un moteur de type Bourke, en particulier pour réaliser des tiges de piston d'un moteur de type Bourke.
